# EUROPEAN PATENT SPECIFICATION

(11) **EP 1 545 907 B1**
(45) Date of publication and mention of the grant of the patent: **21.04.2010**
(21) Application number: 03783838.0
(22) Date of filing: 07.08.2003
(51) Int. Cl.: B60B 19/12

(54) **MULTIPLE DIRECTIONAL WHEEL**
MULTIRICHTUNGSRAD
ROUE MULTIDIRECTIONNELLE

(30) Priority: 07.08.2002 AU 2002950635
(43) Date of publication of application: 29.06.2005
(73) Proprietor: Innowheel Pty Ltd., Forster, NSW 2428 (AU)
(72) Inventor: Guile, Graham, Hallidays Point NSW 2430 (AU)
(74) Representative: Brown, Michael Stanley
(86) International application number: PCT/AU2003/001002
(87) International publication number: WO 2004/014667

(56) References cited:
- WO-A-02/24471
- WO-A-02/24471
- WO-A-02/46031
- WO-A-02/46031
- DE-A- 3 702 660
- DE-A1- 3 702 660
- US-A1- 4 981 203

## Description

### Field of Invention

This invention relates to a wheel. More particularly, this invention relates to a wheel adapted to travel in more than one direction.

### Background Art

The following description of the prior art is not intended to be, nor should it be interpreted as, an indication of the common general knowledge pertaining to the invention.

Traditionally caster wheels have been used to provide wheel support for a wide range of items for which mobility is desirable. The caster wheel has a single wheel rotatable about a general horizontal axis which in turn is mounted to a substantially vertical axis thereby enabling a wheel to travel in any direction from which it is pulled. Caster wheels are generally made of multiple components made of different materials and can require a costly and involved manufacturing process. Moreover, the caster wheel is generally mounted on an object to be moved by a vertical axle making attachment of the wheel to the object sometimes difficult to achieve as access to the underside may be limited and/or awkward.

More recently, another type of wheel capable of multiple directional travel has been considered and includes a central hub rotatable about a main axis and a number of independently mounted rotatable rollers located about the rim of the hub. An improvement on such types of wheel has been described in International Patent Application No. PCT/AU01/01175 by the present applicant and published as WO02/24471 that forms the closest prior art according to the preamble of claim 1. The multiple directional wheel as described in that specification was constructed by moulding or casting a pair of polyaxled rings comprising a plurality of evenly spaced axles about the circumference of each ring. The method then involved the assembly of a roller about each corresponding evenly spaced axle of the multi sided ring. The finished polyaxled rings were then pressed into a wheel frame and the final product was sealed with the corner portions of the polyaxled ring being fixed to supports of the wheel frame. This manufacturing process is complex as a polyaxled ring is required to be moulded separately from that of the remainder of the wheel.

Moreover, the applicant's previously described multiple directional wheel requires the polyaxled wheels to be used in pairs, their adjacent rollers offset relative to one another to ensure good ground contact.

Accordingly, a multiple directional wheel which is relatively inexpensive and simple to manufacture compared to existing wheels and/or a useful manufacturing method alternative to existing wheels is desired.

### Object of Invention

The object of the invention is to provide a multiple directional wheel and method of construction which ameliorates one or more of the disadvantages of the prior art or at least provides a useful alternative thereto.

### Statement of Invention

In one aspect of the invention there is provided multiple directional wheel including:
(a) a frame having a central hub rotatable about a main axis and a plurality of roller supports radially spaced from said central hub;
(b) a plurality of rollers evenly spaced around the circumference of said wheel and rotatably mounted on said roller supports, said rollers rotatable about a corresponding plurality of roller axes substantially aligned in a general plane of said wheel normal to the main axis and transverse to said main axis,
wherein said frame is integrally formed in a first moulding process and said rollers are formed in place on the wheel about said roller supports in a separate process.

The frame may include two or more series of rollers located spaced and parallel to one another.

Each roller may be formed in place on the wheel by one of two different types of methods. A first method includes attaching a temporary sleeve to cover the roller support, the external surface of the temporary sleeve defining an internal bore of the roller to be formed. The temporary sleeve may be in the form of a hollow cylinder of rigid material which may be subsequently dissolved or otherwise destroyed following the successful formation of the roller. The temporary sleeve may comprise a material selectively dissolvable in a solvent in respect of which the frame and roller material are, such as an acid or an organic solvent.

The formation of the roller may include the formation of a tyre around the temporary sleeve or the bush. Where a temporary sleeve is used, the material of the temporary sleeve and that of the tyre may be mutually non-adherent to facilitate removal of the sleeve by chemical, solvent, mechanical or heat (including cold) means.

The roller support may include a variety of formations capable of rotatably supporting the roller mounted thereon. The roller support may include a single terminal axial stub. The roller support may include a pair of opposed coaxial stubs or axle protrusions extending part way along the length of the roller. Preferably, the roller support is in the form of a single axle extending the full length of the roller.

Preferably, however, the roller includes a permanent bush rotatably mounted on a corresponding roller support. The bush may define one or more recesses operative to receive the roller support.

Preferably, the tyre is fixedly secured to the bush. For this purpose, the bush may include external surface features which facilitate adherence of the tyre to the bush. The surface features may include lateral, longitudinal, and/or diagonal ridges, protrusions optionally hooked, or grooves, recesses and the like to improve the mechanical, positive engagement of the tyre material to the bush.

The bush may be made up of sub parts or components. The components may be attachable together for mounting the bush onto the roller support. The components may be a pair of complementary members which may be attached together. The attachment means for the bush components may include, chemical, adhesive, welding or mechanical means. Preferably, the bush components are attached by mechanical means, such as male/female engagement means.

The bush components may be hinged together during manufacture to facilitate easy assembly around the roller support, the free edges being engageable together, such as by complementary engagement means. The bush components may be identical and can thus be made using the same die. Preferably, the bush components are integrally formed by injection moulding involving the formation of a hinge such as a thin strip of material extending partially or fully along the hinged edges of the bush components.

The frame may include a plurality of arms extending from the hub to the roller supports whereby the roller supports are consistently radially spaced from the hub. Preferably, the arms extend radially from the hub. The roller supports may extend between adjacent arms and coaxially with the roller axis. The roller support is preferably in the form of a roller axle extending between adjacent radial arms.

Accordingly, in another aspect of the invention there is provided a multiple directional wheel including:
(a) an integrally formed frame having a central hub rotatable about a main axis, a plurality of radial arms extending outwardly from said central hub and a plurality of roller supports radially spaced from said central hub and extending between adjacent said radial arms;
(b) a plurality of bushes, each bush rotatably mounted on one of said roller supports and operative to freely rotate about said roller support and said corresponding roller axis; and
(c) a plurality of roller tyres evenly spaced around the circumference of said wheel, each tyre fixedly secured on one of said bushes, wherein each pair of roller tyre and bush constitutes a roller and said plurality of rollers is rotatable about a corresponding plurality of roller axes aligned in the plane of said wheel and transverse to said main axis.

Furthermore, in one preferred form of the invention there is provided a multiple directional wheel including:
(a) an integrally formed frame including a central hub rotatable about a main axis, a plurality of radial arms extending outwardly from said central hub and roller supports between adjacent said radial arms, said roller supports being integrally moulded with said central hub and said radial arms;
(b) a discontinuous rim mounted on said radial arm; and
(c) a plurality of rollers together forming said rim, said rollers being regularly spaced around said rim, each said roller rotatable about a roller support having one of a plurality of roller axes, each said roller axis aligned transverse to said main axis, wherein:
   (i) at any one time in the rotation of said wheel about the main axis, at least one of said rollers is operative to have effective ground contact; and
   (ii) each said roller includes a roller tyre and a bush, each said bush being able to rotate around said roller support and about said roller axis, each said tyre formed on each corresponding said bush to form each said roller.

In another aspect of the invention there is provided a double multiple directional wheel including a pair of wheels, each of the first and second wheels as described above,
wherein said second wheel is fixed to said first wheel, the rollers of said second wheel are offset relative to the rollers of said first wheel about said double wheel's main axis whereby, when viewed in side elevation, the circumferential outline of said double wheel is substantially continuous and circular.

The first and second wheels may be formed separately. They may include complementary male and female engagement means by which they are joined. The first and second wheels may be joined by welding the respective hubs together. Preferably, the respective first and second frames are joined by ultrasonic welding. Preferably, the first and second frames are rigidly joined by inserting male engagement means in the form of protrusions into female engagement means in the form of recesses and fusing the joins by ultrasonic welding.

Alternatively, the first and second wheels may be joined by traditional means, such as mechanical fastening means including screws, nuts and bolts, and interference fits combined with fusing or welding methods, such as ultrasonic welding.

In another arrangement, the first and second frames may be formed integrally followed by the attachment and formation of the rollers thereon.

Accordingly, in another preferred form of the invention, there is provided a method of forming a multiple directional wheel having an integrally formed wheel frame including a central hub portion rotatable about a main axis; a rim portion having at least two rims, each rim being formed by a plurality of rollers regularly spaced around the circumference of the rim with each said roller being rotatable about an axis transverse to the main axis and when viewed from a side elevation there being a substantial overlap of diagonally adjacent said rollers on each of the at least two rims such that the wheel is capable of making good ground contact by at least one of the rollers, said method of forming the multiple direction wheel including the steps of :
forming at least two body parts, each said body part having a centre hub with radial arms extending outwardly therefrom with roller supports extending between adjacent said radial arms, said roller supports being integrally moulded with said centre hub and said radial arms of each said part; forming a plurality of bushes around each said roller support, each said bush being able to rotate around said roller support ; forming roller tyres onto each hinged bush to form said rollers; and joining said two parts together to form said integrally formed wheel.

Preferably the bushes are hinged and formed in two halves which in turn clip around the roller supports. The roller tyres are preferably injection moulded onto the hinged bush.

In a preferred form, the two body halves complete with rollers are ultrasonically stud ' welded together to form the wheel.

In another aspect of the invention there is provided a multiple directional double wheel including a pair of wheels, each of the first and second wheels being according to the multiple directional wheel described herein above, the double wheel for movably supporting an article, characterised in that:
(a) the frame of the first wheel and the frame of the second wheel are opposed and separately integrally formed;
(b) a plurality of radial arms extend outwardly from each central hub and the roller supports extend between adjacent the radial arms, the roller supports being integrally moulded with each the central hub and the radial arms on the first wheel or the second wheel;
(c) the plurality rollers of each of the first and second wheels form a discontinuous rim mounted on each the central hub, the first frame offset relative to the second frame about the main axis whereby, when viewed in side elevation, the circumferential outline of the double wheel is substantially continuous and circular;
(d) the plurality of rollers together form each the discontinuous rim, the rollers being regularly spaced around each the rim, each the roller rotatable about a corresponding one of the roller supports having one of a plurality of roller axes, each the roller axis aligned transverse to the main axis; and
(e) each the roller includes a roller tyre and a bush, each the bush being able to rotate around the roller support and about the corresponding roller axis, each the tyre formed on each corresponding the bush to form each the roller.

The article which may be movably supported by the wheel according to the invention may include a trolley, such as a shopping trolley, prams, infant pushers, furniture, such as pianos, and white goods such as fridges and washing machines. Accordingly, the multiple directional wheel may be suitable for supporting articles constituting or possessing high loads. The strength of the wheel, including its various components, may be tailored to suit the particular application, whereby stronger, more rigid materials may be used to support heavier loads, whereas lighter loads, such as prams, may involve the use of multiple directional wheels made to less rigid specifications and higher tolerances. In applications where noise may be an issue, roller tyre materials may be softer and sound absorbing, trading off properties such as hardwearing, strength and abrasion resistance.

Where strength, longevity and abrasion resistance are an issue, harder compounds may be used to form the roller tyres, such as polyurethane.

In another aspect of the invention there is provided a method of forming a multiple directional wheel including the steps of:
(a) forming a frame comprising a central hub rotatable about a main axis and a plurality of roller supports spaced from said central hub, said roller supports being integrally moulded with said central hub, each said roller support aligned with one of a plurality of corresponding roller axes, each said roller axis aligned in the general plane of said frame transverse to said main axis;
(b) mounting a bush around each said roller support, each said bush being able to rotate around one of said roller supports about its corresponding roller axis; and
(c) forming a tyre around each of said bushes in place on said frame whereby each said tyre and bush combination constitutes a roller.

The frame formed by the method may further include a plurality of arms interposed between the hub and the roller supports whereby to space the roller supports radially from the hub. The arms may be radial arms extending from the hub to the rim of the wheel. Each roller support may consist of an axle extending between adjacent radial arms.

The method of forming the multiple directional wheel may include the further step of:
(d) securely fixing a second frame like the first frame described above in relation to the above method to the first frame such that the second frame is fixed coaxially to the first frame and the first and second frames are rotatably mountable on a single axle inserted through their respective hubs.

The second frame may be axially offset relative to the first frame about the main axis so that each roller of the first frame is located diagonally adjacent a pair of rollers of the second frame. This arrangement ensures that the wheel according to the invention at any time provides good ground contact via at least one roller from each of the first and second frames.

Accordingly, whilst a multiple directional wheel including a single frame may be adequate for some purposes where light loads are anticipated, generally a dual or triple framed wheel or a wheel with two or more series of spaced and parallel rollers will be more suitable for heavy load applications.

Step (d) of the above described method may involve welding the first and second frames together. Preferably the welding step involves ultrasonic welding. One or both of the first and second frames may include male engagement means and one or both of the first and second frames may include complementary female engagement means. Preferably, the male engagement means are on one of the first or second frames and the female engagement means are on one of the first or second frames. However, the first and second frames may be identical and include both complementary male and female engagement means.

In another arrangement, the multiple directional wheel may include a third frame and roller combination rigidly joined to the second frame. In such a triple frame arrangement, the rollers of the first, second and third frames are offset relative to one another to provide optimum ground surface contact of at least one roller at any one time.

In yet another aspect of the invention, there is provided a multiple directional wheel for movably supporting an article including:
(a) a pair of opposed integrally formed first and second frames, each said frame including a central hub rotatable about a main axis, a plurality of radial arms extending outwardly from said central hub and roller supports between adjacent said radial arms, said roller supports being integrally moulded with said central hub and said radial arms;
(b) a discontinuous rim mounted on each said central hub, said first frame offset relative to said second frame about said main axis whereby, when viewed in side elevation, the circumferential outline of said wheel is substantially continuous and circular; and
(c) a plurality of rollers together forming each said rim, said rollers being regularly spaced around each said rim, each said roller rotatable about a roller support having one of a plurality of roller axes, each said roller axis aligned transverse to said main axis,
wherein:
(i) when viewed from said side elevation, said adjacent rollers of each said rim present an external surface which generally follows said circumferential outline of said wheel such that said external surface of each said roller forms an arc portion of said circumferential outline;
(ii) at any one time in the rotation of said wheel about the main axis, at least one of said rollers is operative to have effective ground contact; and
(iii) each said roller includes a roller tyre and a bush, each said bush being able to rotate around said roller support and about the corresponding roller axis, each said tyre formed on each corresponding said bush to form each said roller.

### Brief Description of the Drawings

The preferred embodiments of the present invention may be better understood from the following non-limiting description made with reference to the drawings in which:
Fig. 1 is a perspective view of one part of an integrally formed wheel of the present invention,
Fig. 2 is a perspective view of the other part which is joined together with the part of Fig. 1 to form a wheel according to a first embodiment;
Fig. 3a is a perspective view of a temporary sleeve;
Fig. 3b is a perspective view of a hinged bush used to clip around a roller support of the parts of Figs. 1 and 2;
Fig. 4 is a side elevational view of a completed wheel according to the first embodiment;
Fig. 5 is an end view of the wheel of Fig. 4;
Fig. 6 is a sectional view showing an ultrasonically stud weld joined between the two parts;
Fig. 7 is a perspective view of another embodiment of the wheel; and
Fig. 8 is a perspective view of still another embodiment of the wheel.

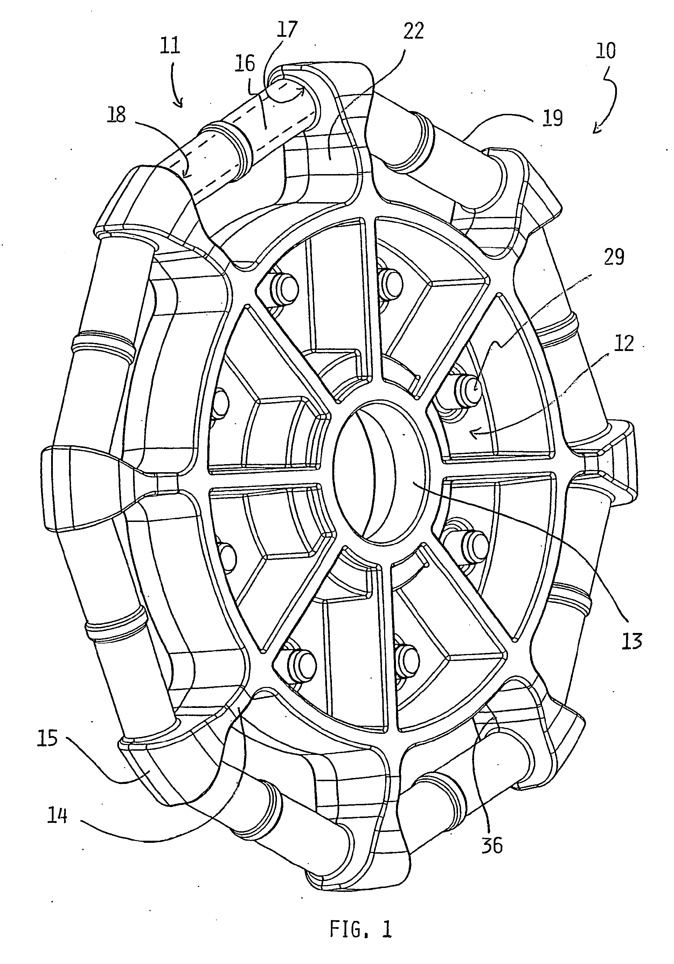

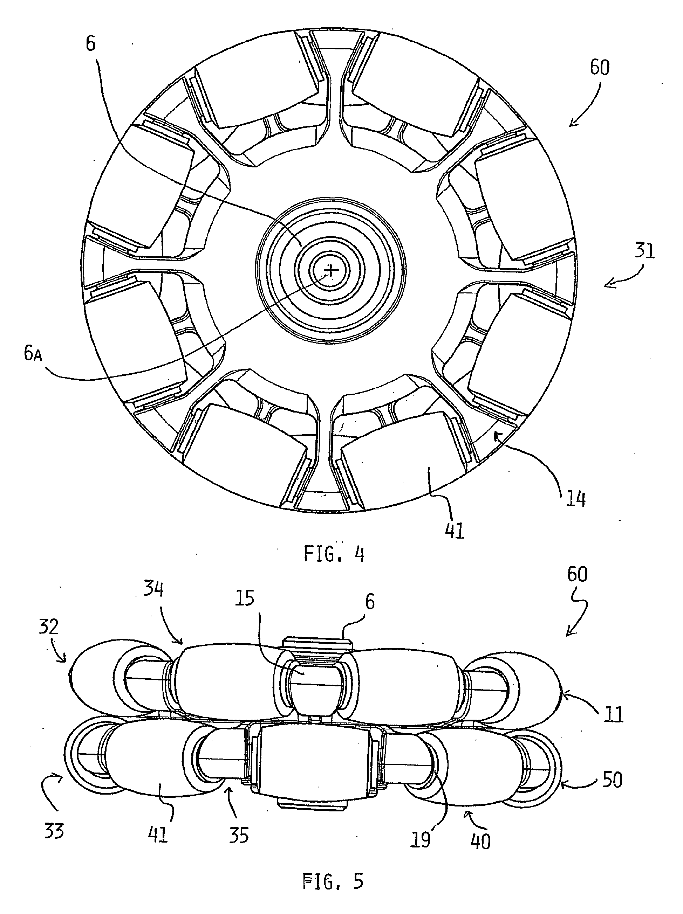

In Fig. 1, there is shown part of a first wheel 10 which part consists of a frame 11 which includes a central hub 12 defining a bore 13 for a main axle 6 (see Figs. 4 and 5). Extending radially out from the hub 12 is a plurality of evenly spaced radial arms 14 terminating in diverging head portions 15. The head portion 15 include internal walls 22 which follow the diverging curve of the head portions 15 so that the walls 22 of adjacent radial arms 14 present opposed, square-on faces between which the cylindrical roller axles 16 extend. Extending between each adjacent pair of head portions 15 is a roller axle 16 represented by broken lines. Each roller axle 16 is substantially solid, cylindrical and of a consistent cross section along its length. However, at each end 17, 18 of the roller axle 16, the ends 17, 18 are radially spread to ensure that a roller 30 (see Fig. 5) mounted thereon. The frame 11 of wheel 10 accordingly includes the integrally formed hub 12, radial arms 14 and roller axles 16.

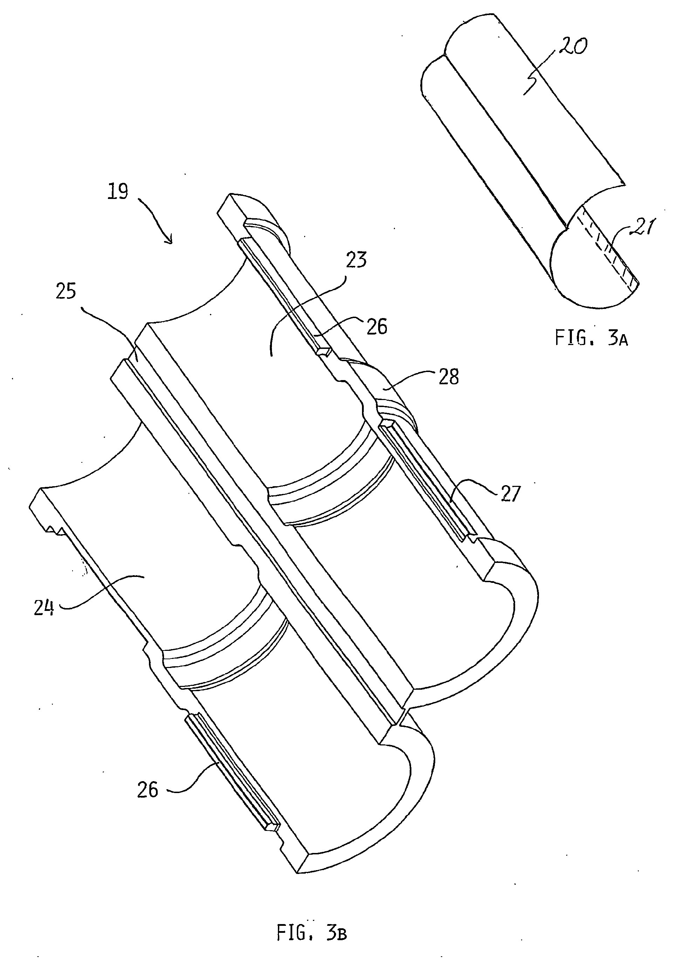

After the frame 11 is integrally formed by an injection moulding process, rollers 40 must be formed on or about the roller axles 16. In one arrangement this is done by attaching a temporary sleeve 20 (see Fig. 3a) to the roller axle 16. The sleeve 20 material may be any easily selectively degradable material able to withstand the injection moulding process. For example the sleeve 20 may be made from a thin polymer film which is dissolvable in a solvent in respect of which the frame 11 and rollers 40 are stable. The sleeve 20 may include a line of adhesive 21 whereby to attach the sleeve 20 to the axle 16. Preferably, the sleeve 20 is made from thin material to minimise play between the roller 40 and the roller axle 16. Once the sleeve 20 is attached, the process involves surrounding the sleeve 20 and axle 16 with a two-part roller die (not shown). The roller die and the temporary sleeve 20, therefore, define the shape of the roller 40 formed therein. Preferably, the means of formation of the roller 40 are by injection moulding into the roller die. The roller die may comprise one part which fits complementarily of the top side of the frame and a second part for the underside of the frame 11. The temporary sleeve 20 may then be selectively removed by a solvent in respect of which the frame 11 and the roller 40 is stable. In this arrangement, the roller 40 comprises a particularly hard material adapted to freely rotate about the roller axle 16 when under load.

A more preferred arrangement involves the attachment to the roller axle 16 of a permanent bush 19 adapted to rotate coaxially about the roller axle 16 with minimal free play. The flared ends of the roller axle 16 ensure that the bush 19 remains centrally located on the roller axle 16 and does not permit the bush 19 to or the roller tyre 41 injection moulded thereon to interfere with the head portion 15.

As best seen in Fig. 3, the bush 19 includes a pair of identical halves 23, 24 joined along mutually adjacent edges by a hinge 25 in the form of a thin elongate strip of material. The component parts 23, 24 and the hinge 25 are preferably integrally formed in a single process. However, it will be noted that the halves 23, 24 are identical and can be formed using the same dye. In such an arrangement, the halves 23, 24 are formed separately without a hinge and are joined by mechanical means. In the embodiment shown in Fig. 3, the hinged halves 23, 24 include complementary male and female engagement means 26, 27 whereby the bush 19 may be wrapped around a roller axle 16 and clipped together by the operation of the male and female engagement means 26, 27 to form a cylindrical sleeve wrapped around the roller axle 16 but free to rotate thereabouts.

The bush 19 includes surface features, such as the annular band 28 to assist the adhesion of the roller tyre 41 material to the bush 19. The surface features may include ridges, grooves, hooks and ledges, etc which extend laterally as shown with feature 28 or randomly longitudinally or diagonally or a combination of all of the above. The surface features may therefore include random features, such as random nodules or protrusions. The bush 19 is preferably made from an extremely strong material, such as acetal resin, and preferably is made from rigid plastics material.

The frame 11 may be made from a range of materials such as polypropylene or high density polyethylene, optionally reinforced by additives such as mica or glass. However, it is preferred that the frame 11 be made from a particularly strong and rigid material such as nylon 66.

Accordingly, the wheel 10 may be formed by first integrally moulding a frame 11, attaching a plurality of cylindrical bushes 19, inserting the frame 11 and bushes 19 in a die defining a corresponding plurality of roller tyre cavities, injection moulding the roller tyres 41 using a suitable material, such as polyurethane, and removing the dies after a suitable cure time resulting in a finalised wheel 10 product. The wheel 10 may be used in applications requiring support of articles of light load where the edge of a roller 40 making ground contact is satisfactory for the purpose.

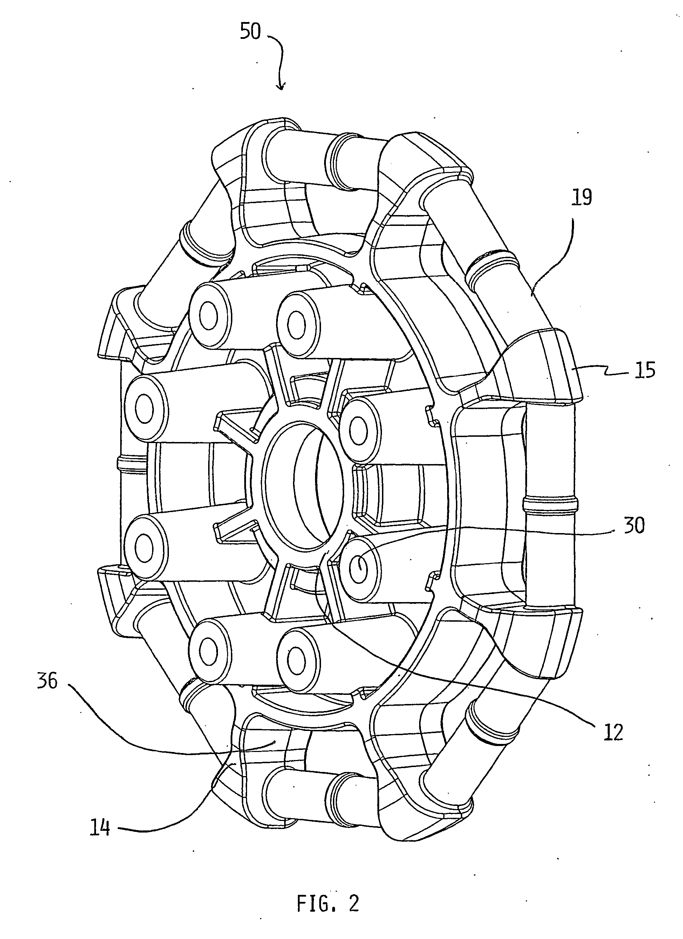

The frame 11 further includes engagement means for attaching the frame 11 to another frame of like construction. Accordingly, the frame 11 includes studs 29 extending normal to the general plane of the wheel 10 which are engageable in an interference fit with corresponding recesses 30 best seen in Fig. 2. Of course, it is possible to produce a frame 11 with studs 29 on one face of the frame and recesses 30 on the opposing face. However, in the embodiment shown, the studs 29 are formed on one frame 11 and the recesses 30 are formed on a second frame 50 of different construction with regard to this aspect but the same as frame 11 in relation to other aspects. To combine the frames 11 and 50, the studs 29 and recesses 30 are lined up in registration and the studs 29 are inserted into the recesses 30. It will be noted that the studs 29 are located intermediate adjacent radial arms 14, whereas the recesses 30 are located in line with the radial arms 14. The studs 29 and recesses 30 may be fixedly secured to one another by a number of means. For example, the engagement means may involve a simple interference fit. However, preferably additional engagement means are provided in the form of adhesives, pressure welding or heat welding. Preferably, the additional engagement means involves ultrasonic welding to ensure a strong bond is formed between the studs 29 and recesses 30. It will further be noted that the studs 29 are inset within the profile of the frame 11 whereas the recesses 30 extend proud from the frame 50. Accordingly, when the frames 11, 50 are fixedly secured to one another, the opposing faces of the respective hubs 11 abut together in solid engagement.

As seen in Figs. 4 and 5, the frames 11, 50 in combination form a wheel 60, each frame 11, 50 having a series of rollers 40 regularly spaced around a rim portion 31 comprising two rims 32, 33. Each of the rims 32, 33 have a series of rollers 40 regularly spaced around the rims 32, 33. The rollers 40 are rotatable about a roller axis transverse to the main axis 6a of the main axle 6.

The rim portion 31 is spaced apart from the central hub 12 by the radial arms 16. The radial arms 16 extend from the central hub 12 to the rims 32, 33 and are formed in two parallel planes to form two parallel parts 34, 35 of the wheel 60.

Each of the rollers 40 as seen in side elevation is in the shape of a by-truncated ellipse having a larger diameter in the middle than at its respective ends. Considerable overlap is provided between diagonally adjacent rollers 40 when viewed from the side elevation of the wheel 60. This is particularly important as the utility of the wheel 60 depends on good ground contact being made by the middle portion of the roller 40 when travelling in a direction transverse to the main axis 6a, particularly for applications such as the support of heavy loads, as opposed to single frame 11 applications described with reference to the wheel 10 in Fig. 1.

It is seen that the rollers 40 on the two rims 32, 33 in combination present a twin rim 31 having a substantially continuous circular profile. This circular rim 31 profile enables the wheel 60 to provide a smooth rotation over the ground travelling in a direction transverse to the main axis 6a and relatively smooth travel in directions parallel to the main axis 6a. Moreover, the combined effect of the circular rim 31 profile, together with the large diameter of the two parts 34, 35 and the substantial overlap between diagonally adjacent rollers 40, provides the wheel 60 with relatively smooth travelling directions parallel to the main axis 6a. The rollers 40 are formed onto the corresponding bushes 19 which extend between adjacent ends of the axial arms 14 as sleeves rotatably mounted around the corresponding roller axles 16. A roller tyre 41 is applied to the bush 19 and is therefore able to rotate about the roller support corresponding to the roller axle 16.

During manufacture, the two parallel parts 34, 35 are formed in integral pieces by injection moulding. The integral parts include the central hub portion 12, the radial arms 14 and the roller supports 16. Complementary protrusions 29 and recesses 30 are formed in the respective hub portions 12 of frames 11, 50 as seen in Figs. 1 and 2 respectively. It is seen that the bisecting part line 36 of injection moulding is through the centre of each of the parts 34, 35 along a line corresponding to the general plane of each of frames 11, 50 normal to the main axis 6a. The roller supports 16 are integrally moulded with the radial arms 14 and the central hub 12 during the moulding process whereby to separately form the frames 11, 50 during the moulding process. The hinged bushes 19 are then applied to the roller supports 16. The bushes 19 which are formed in halves are clipped around the roller supports 16 of each part 34, 35. The parts 34, 35 are then inserted into another mould and tyre material is injected onto each bush 19 to form the rollers 41. The two parts 34, 35 complete with rollers 40 attached thereto, are joined by the engagement of the studs 29 and the recesses 30 and are ultrasonically stud-welded together completing the wheel 60.

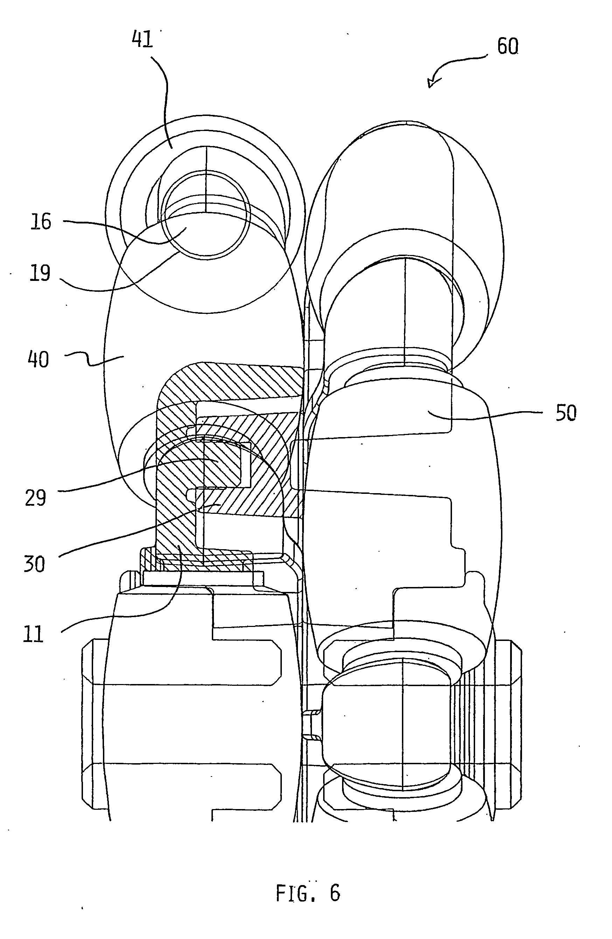

In Fig. 6, the structure and the wheel 60 is shown in greater detail. The respective frames 11, 50 are ultrasonically welded together following the engagement of the studs 29 with the recesses 30 to form a very strong and rigid bond. The rollers 40 are seen in cross-section showing the roller support, (roller axle 16), the bush or sleeve 19, 20 and the roller tyre 41.

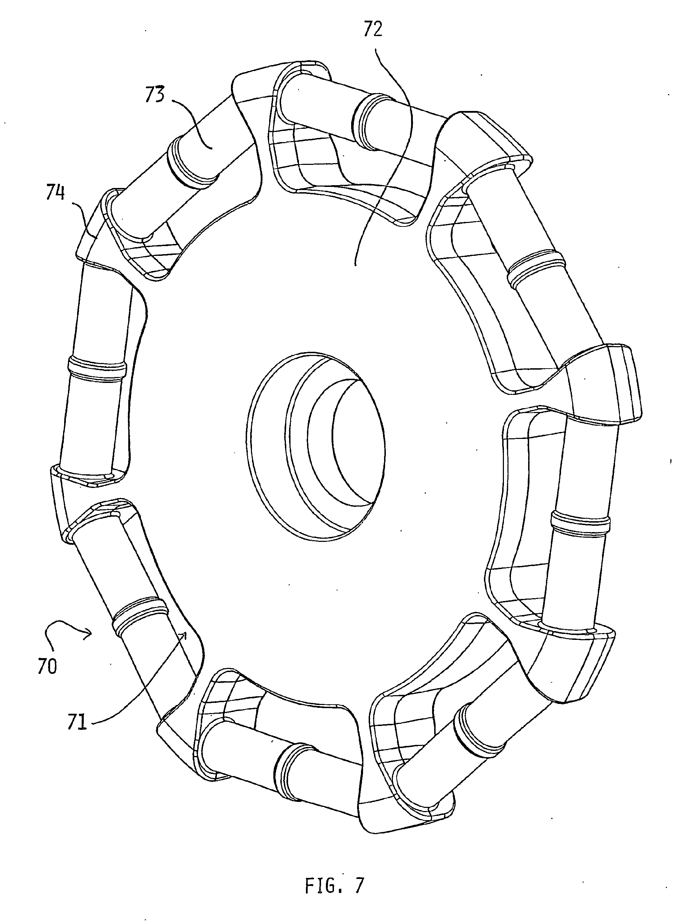

Another embodiment of a wheel according to the invention is shown in Fig. 7. The wheel 70 includes a frame 71 in which the hub 72 and radial arms 74 includes no engagement means to combine with a second frame. Accordingly, frame 71 is useable as a single framed wheel like that of wheel 10 according to the invention. In the drawing, the bushes 73 are shown already attached to the frame 71.

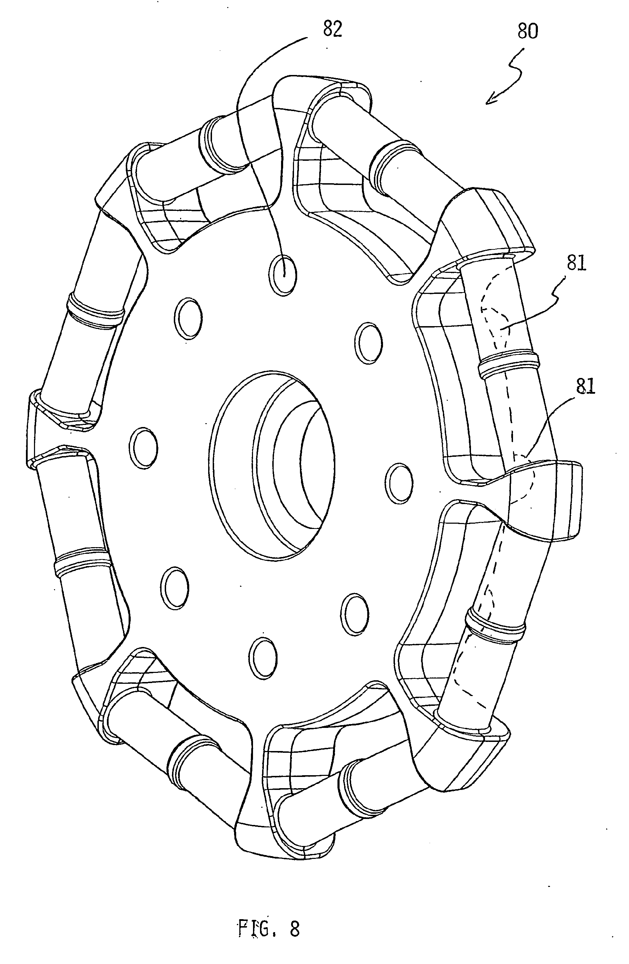

In Fig. 8, there are shown another frame 80 including both male and female engagement means 81, 82. Accordingly, in this embodiment, only a single frame 80 need be manufactured and may be used in a single framed wheel, a double framed wheel, a triple framed wheel, etc., according to the application.

In terms of suitable materials for each of the components, it has been found that the preferred materials are as follows:

Nylon 66 for the frame 11, 50, 71 including the hub 12 72, radial arms 14, 74 and roller axles 16, acetal for the bushes 19 and polyurethane for the roller tyres 41. However, the person skilled in the art will appreciate that many other materials may be suitably used to achieve a workable wheel particularly adapted to the application intended. In some cases, particularly where heavy loads are anticipated, some components of the wheel 10, 60 may be replaced with metal components, such as steel, preferably stainless steel. In particular, the frame 5, 50, 71 may be made from stainless steel in applications where particularly heavy loads are anticipated. Where noise levels are an issue, such as in shopping centres and offices, the roller tyres 41 are preferably made of a soft material (such as a soft grade of polyurethane) to dampen the noise created, possibly sacrificing properties such as hardwearing and abrasion resistance for quieter performance.

It is seen that the manufacture of the wheel according to the preferred embodiment provides an improved manufacturing process which provides for a multiple directional wheel to be manufactured in an easy and efficient manner.

Throughout the specification and claims the word "comprise" and its derivatives are intended to have an inclusive rather than exclusive meaning, unless the context requires otherwise.

It will be appreciated by those skilled in the art that many modifications and variations may be made to the embodiments described herein without departing from the spirit or scope of the invention.

## Claims

1. A multiple directional wheel (10) including:
(a) a frame (1) having a central hub (12) rotatable about a main axis (6A) and a plurality of roller supports (16) radially spaced from said central hub;
(b) a plurality of rollers (40) spaced around the circumference of said wheel (10) and rotatably mounted on said roller supports (16), each of said rollers (40) being rotatable about a respective one of a corresponding plurality of roller axes aligned in the plane of said wheel (10),
**characterised in that** said frame (1) is integrally formed in a first moulding process and said rollers (40) are formed in place on the wheel (10) about said roller supports 16) in a separate process.

2. A wheel according to claim 1, **characterised in that** each said roller (40) includes:
a bush (19) rotatably mounted on a corresponding said roller support (16), which bush (19) defines a recess operative to receive said roller support (16); and
a tyre (41) fixedly secured to said bush (19).

3. A wheel according to claim 2, **characterised in that** said bush (19) includes a pair of complementary part components (23, 24) attachable together for mounting onto said roller support (16.

4. A multiple directional double wheel (60) including first and second wheels (34,35), each of the first and second wheels (34, 35) being a wheel (10) as defined in any one of claims 1 to 3, **characterised in that** said second wheel (35) is fixed to said first wheel (34), the rollers (40) of said second wheel (35) are offset relative to the rollers (40) of said first wheel (34) about said double wheel's main axis (6A) whereby, when viewed in side elevation, the circumferential outline of said double wheel is substantially continuous and circular.

5. A multiple directional double wheel (60) including first and second wheels (34,35), each of the first and second wheels (34,35) being a wheel (10) as defined in any one of claims 1 to 3, said double wheel serving for movably supporting an article, **characterised in that**:
(a) the frame (11) of said first wheel (34) and the frame (50) of- said second wheel (35) are opposed and separately integrally formed;
(b) a plurality of radial arms (14) extend outwardly from each central hub (12) and said rotter supports (16) extend between adjacent radial arms (14), said roller supports (16) being integrally moulded with each said central hub (12) and said radial arms (14) on said first wheel (34) or said second wheel (35);
(c) the plurality of rollers (40) of each of the first and second wheels (34, 35) form a discontinuous rim mounted on each said central hub (12), said first frame (11) being offset relative to said second frame (50) about said main axis (6A) whereby, when viewed in side elevation, the circumferential outline of said double wheel is substantially continuous and circular;
(d) the plurality of rollers (40) together form each said discontinuous rim, said rollers (40) being regularly spaced around each said rim, each said roller (40) being rotatable about a corresponding one of said roller supports (16) having one of a plurality of roller axes, each said roller axis being aligned transverse to said main axis (6A); and
(e) each said roller (40) includes a roller tyre (41) and a bush (19), each said bush (19) being able to rotate around said roller support (16) and about the corresponding roller axis, each said tyre (41) being formed on each corresponding said bush (19) to form each said roller (40).

6. A method of forming a multiple directional wheel (10) including the steps of:
(a) forming a frame (11) comprising a central hub (12) rotatable about a main axis (6A) and a plurality of roller supports (16) spaced from said central hub (12), said roller supports (16) being integrally moulded with said central hub (12), each said roller support (12) being aligned with one of a plurality of corresponding roller axes, each said roller axis being aligned in the general plane of said frame (11) transverse to said main axis (6A);
(b) mounting a bush (19) around each said roller support (16), each said bush (19) being able to rotate around one of said roller supports (16) about its corresponding roller axis; and
(c) forming a tyre (41) around each of said bushes (19) in place on said frame (11) whereby each said tyre (41) and bush (19) combination constitutes a roller.

7. A method of forming a multiple directional wheel (60) according to claim 6 including the further step of:
(d) securely fixing a second frame (50) like the first said frame (11) to said first frame (11) such that said second frame (50) is axially offset relative to said first frame (11) about said main axis (6A) and is coaxial with said first frame (11) so that said first and second frames (11 and 50) are rotatably mountable on a single axle (6).

8. A method of forming a multiple directional double wheel (60) according to claim 7, wherein step (d) involves welding said first and second frames (11, 50) together.

9. A method of forming a multiple directional wheel according to any one of claims 6 to 8 wherein said bush (19) comprises two complementary parts (23,24) that are mounted in step (b) by attaching said two parts together to form a hollow cylindrical sleeve (20) rotatably surrounding said roller support (16).

10. A method of forming a multiple directional wheel according to any one of claims 6 to 9 wherein in step (c) the tyre (41) is formed by moulding said tyre material in a roller die positioned around said bush (19).

## Patentansprüche

1. Multirichtungsrad (10), aufweisend:
(a) einen Rahmen (11) mit einer mittigen Nabe (12), die um eine Hauptachse (6A) drehbar ist, und mehrere Rollenträger (16), die von der mittigen Nabe radial beabstandet sind;
(b) mehrere Rollen (40), die um den Umfang des Rades (10) beabstandet angeordnet sind und drehbar auf den Rollenträgern (16) montiert sind, wobei jede der Rollen (40) um eine jeweilige einer entsprechenden Mehrzahl von Rollenachsen, die in der Ebene des Rades (10) ausgerichtet sind, drehbar ist,
**dadurch gekennzeichnet, dass** der Rahmen (11) in einem ersten Formprozess einstückig gebildet ist, und die Rollen (40) an der Stelle auf dem Rad (10) um die Rollenträger (16) in einem getrennten Prozess gebildet sind.

2. Rad nach Anspruch 1, **dadurch gekennzeichnet, dass** jede der Rollen (40) aufweist:
eine Büchse (19), die drehbar auf einem entsprechenden der Rollenträger (16) montiert ist, wobei die Büchse (19) eine Aussparung definiert, die funktionsfähig ist, um den Rollenträger (16) aufzunehmen; und
einen Reifen (41), der fest an der Büchse (19) befestigt ist.

3. Rad nach Anspruch 2, **dadurch gekennzeichnet, dass** die Büchse (19) ein Paar von komplementären Teilkomponenten (23, 24) aufweist, die zum Montieren auf dem Rollenträger (16) aneinander befestigt werden können.

4. Multirichtungs-Doppelrad (60), aufweisend erste und zweite Räder (34, 35), wobei es sich bei den ersten und zweiten Rädern (34, 35) jeweils um ein Rad (10) nach einem der Ansprüche 1 bis 3 handelt, **dadurch gekennzeichnet, dass** das zweite Rad (35) am ersten Rad (34) befestigt ist, und die Rollen (40) des zweiten Rades (35) in Bezug auf die Rollen (40) des ersten Rades (34) um die Hauptachse (6A) des Doppelrades versetzt sind, wodurch die Umfangskontur des Doppelrades im Seitenaufriss betrachtet im Wesentlichen durchgehend und kreisförmig ist.

5. Multirichtungs-Doppelrad (60), aufweisend erste und zweite Räder (34, 35), wobei es sich bei den ersten und zweiten Rädern (34, 35) jeweils um ein Rad (10) nach einem der Ansprüche 1 bis 3 handelt, und das Doppelrad zum beweglichen Tragen eines Gegenstands dient, **dadurch gekennzeichnet, dass**:
(a) der Rahmen (11) des ersten Rades (34) und der Rahmen (50) des zweiten Rades (35) einander gegenüberliegen und getrennt einstückig ausgebildet sind;
(b) mehrere radiale Arme (14) sich von jeder mittigen Nabe (12) nach außen erstrecken und die Rollenträger (16) sich zwischen benachbarten axialen Armen (14) erstrecken, wobei die Rollenträger (16) mit jeder der mittigen Naben (12) und jedem der radialen Arme (14) auf dem ersten Rad (34) oder auf dem zweiten Rad (35) einstückig geformt sind;
(c) die mehreren Rollen (40) jedes der ersten und zweiten Räder (34, 35) einen unterbrochenen Kranz bilden, der auf jeder der mittigen Naben (12) montiert ist, wobei der erste Rahmen (11) in Bezug auf den zweiten Rahmen (50) um die Hauptachse (6A) versetzt ist, wodurch die Umfangskontur des Doppelrades im Seitenaufriss betrachtet im Wesentlichen durchgehend und kreisförmig ist;
(d) die mehreren Rollen (40) zusammen jeweils den unterbrochenen Kranz bilden, die Rollen (40) um jeden der Kränze regelmäßig beabstandet sind, jede der Rollen (40) um einen entsprechenden der Rollenträger (16) mit einer von mehreren Rollenachsen drehbar ist, und jede der Rollenachsen quer zur Hauptachse (6A) ausgerichtet ist; und
(e) jede der Rollen (40) einen Rollenreifen (41) und eine Büchse (19) aufweist, wobei jede der Büchsen (19) fähig ist, sich um den Rollenträger (16) und um die entsprechende Rollenachse zu drehen, und jeder der Reifen (41) auf jeder entsprechenden der Büchsen (19) ausgebildet ist, um jede der Rollen (40) zu bilden.

6. Verfahren zur Bildung eines Multirichtungsrades (10), aufweisend die folgenden Schritte:
(a) Bilden eines Rahmens (11), aufweisend eine mittige Nabe (12), die um eine Hauptachse (6A) drehbar ist, und mehrere Rollenträger (16), die von der mittigen Nabe (12) beabstandet sind, wobei die Rollenträger (16) mit der mittigen Nabe (12) einstückig geformt sind, jeder der Rollenträger (12) mit einer von mehreren entsprechenden Rollenachsen ausgerichtet ist, und jede der Rollenachsen in der allgemeinen Ebene des Rahmens (11) quer zur Hauptachse (6A) ausgerichtet ist;
(b) Montieren einer Büchse (19) um jeden der Rollenträger (16), wobei jede der Büchsen (19) fähig ist, sich um einen der Rollenträger (16) um ihre entsprechende Rollenachse zu drehen; und
(c) Bilden eines Reifens (41) um jede der Büchsen (19) an der Stelle auf dem Rahmen (11), wodurch jede der Reifen (41)- und Büchsen (19)-Kombinationen eine Rolle bildet.

7. Verfahren zur Bildung eines Multirichtungsrades (60) nach Anspruch 6, aufweisend den folgenden Schritt:
(d) sicheres Befestigen eines zweiten Rahmens (50) wie der erste Rahmen (11) am ersten Rahmen (11), derart dass der zweite Rahmen (50) in Bezug auf den ersten Rahmen um die Hauptachse (6A) axial versetzt ist und koaxial zum ersten Rahmen (11) ist, so dass die ersten und zweiten Rahmen (11 und 50) drehbar auf einer einzigen Achse (6) montierbar sind.

8. Verfahren zur Bildung eines Multirichtungs-Doppelrades (60) nach Anspruch 7, wobei Schritt (d) ein Zusammenschweißen der ersten und zweiten Rahmen (11, 50) einbezieht.

9. Verfahren zur Bildung eines Multirichtungsrades nach einem der Ansprüche 6 bis 8, wobei die Büchse (19) zwei komplementäre Teile (23, 24) aufweist, die in Schritt (b) durch Befestigen der beiden Teile aneinander montiert werden, um eine hohle zylindrische Hülse (20) zu bilden, die den Rollenträger (16) drehbar umgibt.

10. Verfahren zur Bildung eines Multirichtungsrades nach einem der Ansprüche 6 bis 9, wobei in Schritt (c) der Reifen (41) durch Formen des Reifenmaterials in einem Rollenformwerkzeug gebildet wird, das um die Büchse (19) angeordnet wird.

## Revendications

1. Roue multidirectionnelle (10) comportant :
(a) un cadre (11) ayant un moyeu central (12) pouvant tourner autour d'un axe principal (6A) et une pluralité de supports de rouleaux (16) espacés radialement depuis ledit moyeu central ;
(b) une pluralité de rouleaux (40) espacés autour de la circonférence de ladite roue (10) et montés à rotation sur lesdits supports de rouleaux (16), chacun desdits rouleaux (40) pouvant tourner autour d'un axe de rouleau respectif d'une pluralité correspondante d'axes de rouleaux alignés dans le plan de ladite roue (10),
**caractérisée en ce que** ledit cadre (11) est formé intégralement dans un premier processus de moulage et lesdits rouleaux (40) sont formés en place sur la roue (10) autour desdits supports de rouleaux (16) dans un processus séparé.

2. Roue selon la revendication 1, **caractérisée en ce que** chacun desdits rouleaux (40) comporte :
une douille (19) montée à rotation sur un dit support de rouleau correspondant (16), ladite douille (19) définissant un retrait servant à recevoir ledit support de rouleau (16) ; et
un pneu (41) fixé solidement à ladite douille (19).

3. Roue selon la revendication 2, **caractérisée en ce que** ladite douille (19) comporte une paire de composants partiels complémentaires (23, 24) pouvant être attachés l'un à l'autre pour être montés sur ledit support de rouleau (16).

4. Double roue multidirectionnelle (60) comportant des première et deuxième roues (34, 35), chacune des première et deuxième roues (34, 35) étant une roue (10) telle que définie dans l'une quelconque des revendications 1 à 3, **caractérisée en ce que** ladite deuxième roue (35) est fixée à ladite première roue (34), les rouleaux (40) de ladite deuxième roue (35) sont décalés par rapport aux rouleaux (40) de ladite première roue (34) autour dudit axe principal (6A) de la double roue, de sorte que, vu en élévation latérale, le pourtour de la circonférence de ladite double roue soit substantiellement continu et circulaire.

5. Double roue multidirectionnelle (60) comportant des première et deuxième roues (34, 35), chacune des première et deuxième roues (34, 35) étant une roue (10) telle que définie dans l'une quelconque des revendications 1 à 3, ladite double roue servant à supporter de manière mobile un article, **caractérisée en ce que** :
(a) le cadre (11) de ladite première roue (34) et le cadre (50) de ladite deuxième roue (35) sont opposés et formés intégralement séparément ;
(b) une pluralité de bras radiaux (14) s'étendent vers l'extérieur depuis chaque moyeu central (12) et lesdits supports de rouleaux (16) s'étendent entre des bras radiaux adjacents (14), lesdits supports de rouleaux (16) étant moulés intégralement avec chaque dit moyeu central (12) et avec lesdits bras radiaux (14) sur ladite première roue (34) ou ladite deuxième roue (35) ;
(c) la pluralité de rouleaux (40) de chacune des première et deuxième roues (34, 35) forme une jante discontinue montée sur chaque dit moyeu central (12), ledit premier cadre (11) étant décalé par rapport audit deuxième cadre (50), autour dudit axe principal (6A), de sorte que, vu en élévation latérale, le pourtour de la circonférence de ladite double roue soit substantiellement continu et circulaire ;
(d) la pluralité de rouleaux (40) forment ensemble chaque dite jante discontinue, lesdits rouleaux (40) étant espacés régulièrement autour de chaque dite jante, chaque dit rouleau (40) pouvant tourner autour d'un support de rouleau correspondant parmi lesdits supports de rouleaux (16) ayant un axe de rouleau parmi une pluralité d'axes de rouleaux, chaque dit axe de rouleau étant aligné transversalement audit axe principal (6A) ; et
(e) chaque dit rouleau (40) comporte un pneu de rouleau (41) et une douille (19), chaque dite douille (19) pouvant tourner autour dudit support de rouleau (16) et autour de l'axe de rouleau correspondant, chaque dit pneu (41) étant formé sur chaque dite douille (19) correspondante pour former chaque dit rouleau (40).

6. Procédé pour former une roue multidirectionnelle (10) comportant les étapes consistant à :
(a) former un cadre (11) comprenant un moyeu central (12) pouvant tourner autour d'un axe principal (6A) et une pluralité de supports de rouleaux (16) espacés dudit moyeu central (12), lesdits supports de rouleaux (16) étant moulés intégralement avec ledit moyeu central (12), chaque dit support de rouleau (12) étant aligné avec l'un d'une pluralité d'axes de rouleaux correspondants, chaque dit axe de rouleau étant aligné dans le plan général dudit cadre (11) transversalement audit axe principal (6A) ;
(b) monter une douille (19) autour de chaque dit support de rouleau (16), chaque dite douille (19) pouvant tourner autour d'un desdits supports de rouleaux (16) autour de son axe de rouleau correspondant ; et
(c) former un pneu (41) autour de chacune desdites douilles (19) en position sur ledit cadre (11) de sorte que chaque combinaison dudit pneu (41) et de ladite douille (19) constitue un rouleau.

7. Procédé pour former une roue multidirectionnelle (60) selon la revendication 6, comportant l'étape supplémentaire consistant à :
(d) fixer solidement un deuxième cadre (50) comme ledit premier cadre (11) audit premier cadre (11) de telle sorte que ledit deuxième cadre (50) soit décalé axialement par rapport audit premier cadre (11) autour dudit axe principal (6A) et soit coaxial audit premier cadre (11) de sorte que lesdits premier et deuxième cadres (11 et 50) puissent être montés à rotation sur un essieu unique (6).

8. Procédé pour former une double roue multidirectionnelle (60) selon la revendication 7, dans lequel l'étape (d) implique de souder lesdits premier et deuxième cadres (11, 50) l'un à l'autre.

9. Procédé pour former une roue multidirectionnelle selon l'une quelconque des revendications 6 à 8, dans lequel ladite douille (19) comprend deux parties complémentaires (23, 24) qui sont montées dans l'étape (b) en attachant lesdites deux parties ensemble pour former un manchon cylindrique creux (20) entourant de manière rotative ledit support de rouleau (16).

10. Procédé pour former une roue multidirectionnelle selon l'une quelconque des revendications 6 à 9, dans lequel, dans l'étape (c), le pneu (41) est formé en moulant ledit matériau de pneu dans un moule de rouleau positionné autour de ladite douille (19).
